# EUROPÄISCHE PATENTSCHRIFT

(11) **EP 0 874 763 B1**
(45) Veröffentlichungstag und Bekanntmachung des Hinweises auf die Patenterteilung: **08.03.2000**
(21) Anmeldenummer: 97900045.2
(22) Anmeldetag: 09.01.1997
(51) Int. Cl.: B65D 51/00

(54) **ÜBERDRUCK-UNTERDRUCKVENTIL FÜR EINEN STUTZENVERSCHLUSS**
OVER/UNDERPRESSURE VALVE FOR A FILLER NECK CAP ASSEMBLY
SOUPAPE DE SURPRESSION/DEPRESSION POUR SYSTEME DE FERMETURE DE TUBULURE DE REMPLISSAGE

(30) Priorität: 09.01.1996 AT 3596
(43) Veröffentlichungstag der Anmeldung: 04.11.1998
(73) Patentinhaber: BLAU International Gesellschaft m.b.H., 8160 Preding (AT)
(72) Erfinder: MUTH, Manfred, Karl, Joachim, D-58840 Plettenberg (DE); PALVÖLGYI, Sandor, A-8200 Gleisdorf (AT)
(74) Vertreter: Weiser, Andreas, Dipl.-Ing.
(86) Internationale Anmeldenummer: AT9700002
(87) Internationale Veröffentlichungsnummer: WO9727123

(56) Entgegenhaltungen:
- US-A- 4 133 346
- US-A- 5 108 001

## Beschreibung

Die vorliegende Erfindung betrifft ein Über- und/oder Unterdruckventil zum Einbau in einen Verschluß für einen Fahrzeugtank-Einfüllstutzen, mit einem im wesentlichen zylindrischen Ventilgehäuse, in dem eine einen ersten Ventilspalt steuernde Ventilspindel axial beweglich gelagert ist, auf welcher gegebenenfalls eine einen zweiten Ventilspalt steuernde Hülse axial beweglich geführt ist.

Ein derartiges Ventil ist durch die US-A-5 108 001 bekannt geworden.

Bei bekannten Über-Unterdruckventilen zum Einbau in Tankverschlüsse ist entweder gar keine Ventilspindel vorhanden, d.h. der Ventilteller wird von einer Druckfeder schwimmend gegen den Ventilsitz gepreßt, oder es ist eine nur einseitig im Ventilgehäuse geführte, d.h. am anderen Ende freitragende Ventilspindel vorgesehen. Im ersten Fall kann sich ein mangelhafter Ventilsitz ergeben. Auch im zweiten Fall haben sich in der Praxis Probleme bei der ordnungsgemäßen Ventilfunktion im Dauerbetrieb gezeigt, ohne daß deren Ursachen bislang bekannt oder näher untersucht worden wären. Es wurde vielmehr angenommen, daß sich der Ventilsitz im Lauf der Zeit verschlechtert.

Die Erfindung setzt sich zum Ziel, ein Über- und/oder Unterdruckventil zum Einbau in einen Verschluß für einen Fahrzeugtank-Einfüllstutzen zu schaffen, das über lange Zeit seine Funktionsfähigkeit beibehält. Dieses Ziel wird erfindungsgemäß dadurch erreicht, daß die Ventilspindel eine zentrale Öffnung in der Oberseite und eine zentrale Öffnung in der Unterseite des Ventilgehäuses durchsetzt und von diesen Öffnungen axial geführt ist.

Es ist das Verdienst der Anmelderin, erstmals erkannt zu haben, daß die mangelhafte Ventilfunktion der bekannten Konstruktionen darauf zurückzuführen ist, daß die starken Erschütterungen im Fahrzeugbetrieb über längere Zeit ein "Festfressen" der Ventilspindel in ihrem Lager bewirkt, wenn sie nur an einem Ende gelagert ist und an ihrem anderen Ende frei auskragt. Im Gegensatz dazu ist bei der erfindungsgemäßen Konstruktion die Ventilspindel auf beiden Seiten axial geführt, so daß sie auch bei starken Erschütterungen über lange Zeit voll beweglich bleibt.

Eine bevorzugte Ausführungsform der Erfindung besteht darin, daß das Ventilgehäuse einen etwa topfförmigen Aufnahmeteil aus geformtem Blech und einen diesen verschließenden, im wesentlichen scheibenförmigen Deckelteil aus starrem Material umfaßt, dessen Umfangsrand vom oberen Rand des Aufnahmeteiles übergriffen ist und mit letzterem einen zur Verankerung im Verschluß dienenden Umfangsflansch bildet. Dies ermöglicht eine besonders kostengünstige Fertigung und stellt gleichzeitig einen Umfangsflansch zur Verankerung des Ventiles im Verschluß zur Verfügung.

Bevorzugt ist zwischen Aufnahmeteil und Deckelteil eine Ringdichtung festgelegt, an der ein von der Ventilspindel mitgeführter erster Ventilteller in einem ersten Ringbereich und ein von der Hülse mitgeführter zweiter Ventilteller in einem zweiten, radial verschiedenen Ringbereich anliegt. Die Verwendung einer einzigen Ringdichtung sowohl für die Überdruck- als auch die Unterdruckventilfunktion in Verbindung mit der Befestigung zwischen den beiden Ventilgehäuseteilen ergibt eine weitere Fertigungsvereinfachung.

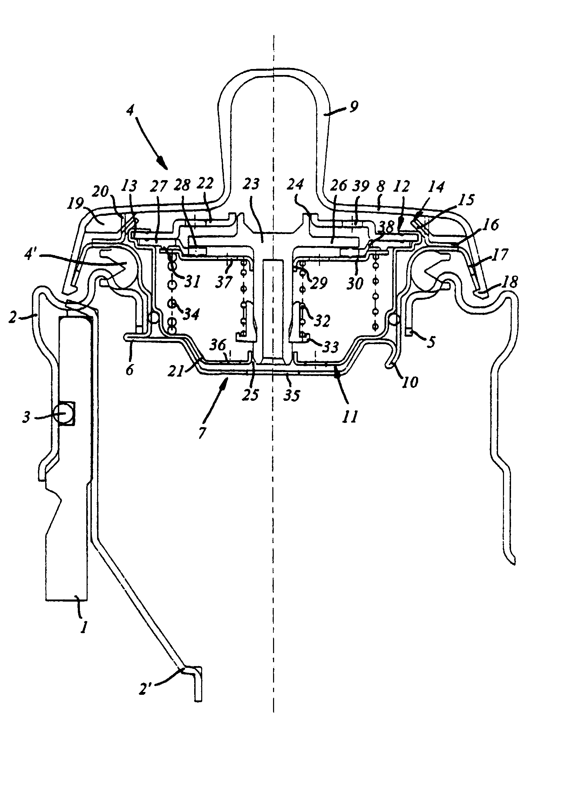

Die Erfindung wird nachstehend an Hand eines in der beigeschlossenen Zeichnung dargestellten Beispieles näher erläutert. Die einzige Figur der Zeichnung zeigt das erfindungsgemäße Überdruck-Unterdruckventil, eingebaut in einen Verschluß in Verbindung mit einem ausschnittsweise dargestellten Einfüllstutzen, wobei die linke und die rechte Hälfte der Figur in rechtem Winkel zueinander stehende Axialschnitthälften zeigen.

In der Figur ist das obere Ende 1 eines (nicht weiter dargestellten) Einfüllstutzens gezeigt, der zu einem Fahrzeug-Kraftstofftank führt. Auf das Einfüllstutzenende 1 ist ein Metallring 2 unter Zwischenschaltung eines O-Ringes 3 aufgezogen. Der Metallring 2 dient zur Verankerung eines allgemein mit 4 bezeichneten Verschlusses und weist zu diesem Zweck an seinem Innenumfang Bajonett- oder Schraubnuten 5 für den Eingriff entsprechender Vorsprünge 6 des Verschlusses 4 auf. Zwischen dem Verschluß 4 und dem Metallring 2 ist eine ringförmige Formdichtung 4' vorgesehen. Zwischen dem Metallring 2 und der Stirnseite des Einfüllstutzenendes 1 ist ein Führungstrichter 2' zur Führung einer (nicht dargestellten) Zapfpistole zum Betanken festgelegt.

Der Verschluß 4 umfaßt im wesentlichen einen aus Blech geformten topfförmigen Einsatz 7, welcher die Vorsprünge 6 trägt, und eine aus Kunststoff geformte, auf das aus dem Einfüllstutzenende 1 ragende obere Ende des Einsatzes 7 aufgesteckte Abdeckkappe 8. Die Abdeckkappe 8 ist mit einem zentralen Griff 9 versehen. Die Vorsprünge 6 werden aus einem am Umfang des Bodens des Einsatzes 7 nach unten vorragenden Kragen 10 gebildet.

Im Einsatz 7 ist das erfindungsgemäße Überdruck-Unterdruckventil aufgenommen, welches allgemein mit 11 bezeichnet ist. Das Überdruck-Unterdruckventil 11 ist zur Gänze in einem zylindrischen Ventilgehäuse 12 eingeschlossen, das an seinem oberen Ende einen Umfangsflansch 13 aufweist, mit welchem es im umgeformten Rand 14 des Einsatzes 7 festgelegt ist. Das Umformen des Randes 14 um den Umfangsflansch 13 herum kann beispielsweise durch Bördeln erfolgen, oder, wie in dem dargestellten Fall, durch Einwärtsbiegen von Zungen 15, die in einem angeschweißten Ring 16 ausgebildet sind.

Im Anschluß an den den Umfangsflansch 13 festlegenden Umformungsbereich ist der Rand 14 verlängert und unter einem stumpfen Winkel von etwa 160° bezüglich der Axialrichtung nach außen zurückgeschlagen, so daß sich ein kegelstumpfförmiger Umschlag 17 ergibt, auf welchen die Abdeckkappe 8 mit Hilfe einwärts gerichteter Rastvorsprünge 18 aufgeschnappt werden kann. Die Abdeckkappe 8 ist mit radialen Innenrippen 19 versehen, die in radiale Einschnitte 20 im Ring 16 eingreifen und ein auf die Abdeckkappe aufgebrachtes Drehmoment auf den Einsatz 7 übertragen, um diesen am Einfüllstutzen anzubringen bzw. zu entfernen.

Das Ventilgehäuse 12 des Überdruck-Unterdruckventiles 11 setzt sich aus einem im wesentlichen topfförmigen Aufnahmeteil 21 aus geformtem Blech und einem Deckelteil 22 aus starrem Material, z.B. einer Metallplatte mit einer Dicke von 3 mm, zusammen.

Im Ventilgehäuse 12 ist eine Ventilspindel 23 axial beweglich gelagert. Die Ventilspindel 23 durchsetzt eine zentrale Öffnung 24 im Deckelteil 22 und eine zentrale Öffnung 25 im Boden des Aufnahmeteiles 21 und wird somit von diesen beiden Öffnungen an ihren beiden Enden axial geführt.

Die Ventilspindel 23 trägt (einstückig angeformt) einen ersten Ventilteller 26, welcher mit einer Ringdichtung 27 in einem ersten Ringbereich 28 zusammenwirkt. Die Ringdichtung 27 ist zwischen dem Deckelteil 22 und dem Aufnahmeteil 21 festgelegt. Auf der Ventilspindel 23 ist ferner eine Hülse 29 axial beweglich geführt, die einen zweiten Ventilteller 30 trägt, der mit der Ringdichtung 27 in einem zweiten Ringbereich 31 zusammenwirkt. Die Hülse 29 ist bei der gezeigten Ausführungsform auf die Axiallänge eines kurzen Kragens reduziert, könnte aber auch wesentlich länger sein.

Der erste Ventilteller 26 ist über eine Druckfeder 32, welche zwischen einem auf der Ventilspindel 23 axial fixierten Schulterring 33 und dem zweiten Ventilteller 30 wirkt, in Richtung auf die Ringdichtung 27 hin vorgespannt. Der zweite Ventilteller 30 ist mit Hilfe einer Druckfeder 34, welche sich am Boden des Aufnahmeteiles 21 abstützt, ebenfalls in Richtung auf die Ringdichtung 27 vorgespannt.

Strömungsöffnungen 35 bis 39, die im Einsatz 7, dem Aufnahmeteil 21, dem zweiten Ventilteller 30, der Ringdichtung 27, dem Deckelteil 22 bzw. dem Rand 16 ausgespart sind, geben entweder einen Strömungsweg über den Ventilspalt zwischen erstem Ventilteller 26 und Ringdichtung 27, wenn im Inneren des Einfüllstutzens 1 ein Überdruck herrscht, oder einen Strömungsweg über den Ventilspalt zwischen zweitem Ventilteller 30 und Ringdichtung 27, wenn im Inneren des Einfüllstutzens 1 ein Unterdruck herrscht, frei. Die Funktionsweise eines derartigen überdruck-Unterdruckventiles ist in der Technik bekannt.

Die Erfindung ist selbstverständlich nicht auf die dargestellte Ausführungsform beschränkt. Beispielsweise kann das Überdruck-Unterdruckventil von jeglicher bekannten Konstruktion oder Funktion sein, z.B. können auch beide Ventilteller konzentrisch an einer Seite der Ringdichtung anliegen. Es ist auch möglich, nur eine Überdruck- oder nur eine Unterdruckventilfunktion vorzusehen, in welchen Fällen die Hülse, der zweite Ventilteller und die zweite Druckfeder entfallen und der Aufbau des Ventiles sich entsprechend vereinfacht.

## Patentansprüche

1. Über- und/oder Unterdruckventil zum Einbau in einen Verschluß für einen Fahrzeugtank-Einfüllstutzen, mit einem im wesentlichen zylindrischen Ventilgehäuse, in dem eine einen ersten Ventilspalt steuernde Ventilspindel axial beweglich gelagert ist, auf welcher gegebenenfalls eine einen zweiten Ventilspalt steuernde Hülse axial beweglich geführt ist, dadurch gekennzeichnet, daß die Ventilspindel (23) eine zentrale Öffnung (24) in der Oberseite und eine zentrale Öffnung (25) in der Unterseite des Ventilgehäuses (12) durchsetzt und von diesen Öffnungen (24, 25) axial geführt ist.

2. Ventil nach Anspruch 1, dadurch gekennzeichnet, daß das Ventilgehäuse (12) einen etwa topfförmigen Aufnahmeteil (21) aus geformtem Blech und einen diesen verschließenden, im wesentlichen scheibenförmigen Deckelteil (22) aus starrem Material umfaßt, dessen Umfangsrand vom oberen Rand des Aufnahmeteiles (21) übergriffen ist und mit letzterem einen zur Verankerung im Verschluß (4) dienenden Umfangsflansch (13) bildet.

3. Ventil nach Anspruch 1 oder 2, dadurch gekennzeichnet, daß zwischen Aufnahmeteil (21) und Deckelteil (22) eine Ringdichtung (27) festgelegt ist, an der ein von der Ventilspindel (23) mitgeführter erster Ventilteller (26) in einem ersten Ringbereich (28) und ein von der Hülse (29) mitgeführter zweiter Ventilteller (30) in einem zweiten, radial verschiedenen Ringbereich (31) anliegt.

## Claims

1. Pressure and/or suction relief valve for installation in a cap for the filler neck of a vehicle fuel tank, comprising a substantially cylindrical valve housing in which a valve spindle controlling a first valve gap is axially movably supported, on which a sleeve controlling a second valve gap is possibly axially movably guided, characterised in that the valve spindle (23) traverses a central opening (24) in the top and a central opening (25) in the underside of the valve housing (12) and is axially guided by these openings (24, 25).

2. Valve according to claim 1, characterised in that the valve housing (12) includes a substantially pot-shaped receiving part (21) of formed sheet metal and a substantially disc-shaped cover part (22) of rigid material closing it, its circumferential edge being engaged by the upper edge of the receiving part (21) and forming a circumferential flange (13) serving for anchoring in the cap (4) together therewith.

3. Valve according to claim 1 or claim 2, characterised in that an annular seal (27) is fixed between the receiving part (21) and the cover part (22), a first valve disc (26) carried along by the valve spindle (23) bearing against the said annular seal in a first annular region (28) and a second valve disc (30) carried along by the sleeve (29) bearing against it in a second radially different annular region (31).

## Revendications

1. Soupape de surpression/dépression destinée à être intégrée dans une fermeture pour une tubulure de remplissage d'un réservoir automobile, comprenant un boîtier de soupape sensiblement cylindrique, dans lequel est montée en déplacement axial une broche de soupape qui commande le premier intervalle de soupape et sur laquelle est guidée en mouvement axial le cas échéant une douille qui commande un deuxième intervalle de soupape, caractérisée en ce que la broche de soupape (23) traverse une ouverture centrale (24) dans la face supérieure et une ouverture centrale (25) dans la face inférieure du boîtier de soupape (12), et est guidée axialement par ces ouvertures (24, 25).

2. Soupape selon la revendication 1, caractérisée en ce que le boîtier de soupape (12) comprend une partie de réception (21) en tôle conformée approximativement en forme de godet, et une partie de couvercle (22) en matériau rigide sensiblement sous forme de disque, qui referme ladite partie de réception et dont la bordure périphérique est coiffée par la bordure supérieure de la partie de réception (21), et forme avec cette dernière une bride périphérique (13) servant à l'ancrage dans la fermeture (4).

3. Soupape selon l'une ou l'autre des revendications 1 et 2, caractérisée en ce que, entre la partie de réception (21) et la partie de couvercle (22), est fixé un joint annulaire (27) contre lequel s'appliquent un premier opercule de soupape (26) entraîné conjointement par la broche de soupape (23), dans une première zone annulaire (28), et un deuxième opercule de soupape (30) entraîné conjointement par la douille (29), dans une deuxième zone annulaire (31) différente dans le sens radial.
